**Europäisches Patentamt**

**European Patent Office**

**Office européen des brevets**

(19)

(11) Veröffentlichungsnummer: **0 015 384**
**B1**

(12) EUROPÄISCHE PATENTSCHRIFT

(45) Veröffentlichungstag der Patentschrift:
03.03.82

(51) Int. Cl.³: **C 01 B 25/023**

(21) Anmeldenummer: **80100510.9**

(22) Anmeldetag: **01.02.80**

(54) Verfahren und Vorrichtung zur Herstellung von rotem Phosphor.

(30) Priorität: **23.02.79 DE 2907059**

(43) Veröffentlichungstag der Anmeldung:
**17.09.80 Patentblatt 80/19**

(45) Bekanntmachung des Hinweises auf die Patenterteilung:
**03.03.82 Patentblatt 82/9**

(84) Benannte Vertragsstaaten:
**BE CH DE FR GB IT NL SE**

(56) Entgegenhaltungen:
**DE-A1-2 804 340**
**DE-C-520 382**
**US-A-2 397 951**
**US-A-3 207 583**

(73) Patentinhaber: **HOECHST AKTIENGESELLSCHAFT,**
**Postfach 80 03 20, D-6230 Frankfurt/Main 80 (DE)**

(72) Erfinder: **Lehr, Klaus, Dr., Alleestrasse 52,**
**D-5030 Hürth-Knapsack (DE)**
Erfinder: **Heymer, Gero, Dr., Fasanenaue 12,**
**D-5042 Erftstadt (DE)**
Erfinder: **Stephan, Hans-Werner, Ölbergstrasse 77,**
**D-5000 Köln 41 (DE)**
Erfinder: **Thümmler, Ursus, Dr., Am Kapellenbusch 27,**
**D-5042 Erftstadt (DE)**

ACTORUM AG.

## Verfahren und Vorrichtung zur Herstellung von rotem Phosphor

Die vorliegende Erfindung betrifft ein Verfahren zur Herstellung von rotem Phosphor durch thermische Umwandlung von geschmolzenem gelbem Phosphor in einer geschlossenen Reaktionszone, wobei die Temperatur in der Reaktionszone über die Dosierung des in sie eingebrachten gelben Phosphors geregelt wird, sowie eine Vorrichtung zur Durchführung des erfindungsgemässen Verfahrens.

Unter gelbem Phosphor wird im Rahmen der vorliegenden Erfindung die weisse bzw. farblose Modifikation des Phosphors verstanden.

Aus der DE-A-2 804 340 ist ein Verfahren zur Herstellung von rotem Phosphor durch thermische Umwandlung von gelbem Phosphor in einem geschlossenen Reaktionsbehälter bekannt, wonach man feinverteilten roten Phosphor im Behälter auf eine Temperatur von oberhalb etwa 250°C erhitzt. Auf das erhitzte und kontinuierlich bewegte Bett aus rotem Phosphor spritzt man geschmolzenen gelben Phosphor und zieht aus dem Behälter kontinuierlich ein Gemisch von gelbem und rotem Phosphor ab. Aus dem Gemisch entfernt man schliesslich den gelben Phosphor durch Verdampfen.

Die Einrichtung zur Gewinnung von pulverförmigem rotem Phosphor nach der DE-C-520 382 besteht aus einer mit Kugeln gefüllten Trommel, welche mit zwei drehbar gelagerten Wellen versehen ist, von denen die eine Welle eine Hohlwelle ist. Die Trommel, welche eine mit einem Deckel verschliessbare Luke aufweist, ist in einer geschlossenen Kammer drehbar, welche von unten mit Ofengasen beheizbar ist. Die Hohlwelle weist an ihrem äusseren Ende eine Stopfbüchse auf, in welcher ein abgewinkeltes feststehendes Rohr läuft, das in einem mit Wasser gefüllten Gefäss abgetaucht ist.

Schliesslich wird in der US-A-3 207 583 ein Verfahren zur diskontinuierlichen Umwandlung von gelbem Phosphor in roten Phosphor beschrieben, bei welchem gelber Phosphor in einem geschlossenen Behälter in inerter Atmosphäre zunächst linear auf eine Temperatur von mindestens 275°C bis weniger als 340°C erhitzt und mindestens 5 Stunden bei dieser Temperatur gehalten wird. Dann wird die Temperatur des Phosphors auf mindestens 340°C erhöht und mindestens 3 Stunden dabei belassen. Schliesslich wird der Phosphor auf etwa 190°C abgekühlt und mindestens 17 Stunden bei dieser Temperatur gehalten, bevor das nunmehr mindestens 99% roten Phosphor enthaltende Material auf Raumtemperatur abgekühlt und aus dem Behälter entnommen wird.

Nachteilig ist bei dem aus der DE-A-2 804 340 bekannten Verfahren, dass das aus dem Behälter abgezogene Produkt nur bestenfalls zu 95% aus rotem Phosphor besteht. Die erforderliche Entfernung des gelben Phosphors aus dem Produkt auf destillativem Wege ist recht aufwendig.

Mit der bekannten Einrichtung gemäss der DE-C-520 382 ist zwar ein hochprozentiger roter Phosphor erhältlich, doch ist infolge des reinen Chargenbetriebes die damit erzielte Raum-Zeit-Ausbeute unbefriedigend.

Von Nachteil ist bei dem in der US-A-3 207 583 beschriebenen Verfahren, dass der Zeitraum jeder Charge sehr lang ist, bis Temperaturen oberhalb von 340°C angewendet werden können. Dadurch ergibt sich eine schlechte Raum-Zeit-Ausbeute.

Es ist daher Aufgabe der vorliegenden Erfindung, ein Verfahren zur Herstellung von rotem Phosphor durch thermische Umwandlung von gelbem Phosphor sowie eine Vorrichtung zu seiner Durchführung anzugeben, wobei bei teilkontinuierlichem Ablauf und befriedigender Raum-Zeit-Ausbeute ein nahezu reiner roter Phosphor erhalten wird. Das wird erfindungsgemäss dadurch erreicht, dass in eine mit Eisenkugeln bis zu 20% ihres Volumens gefüllte Kugelmühle, welche auf eine Temperatur von 280 bis 590°C, vorzugsweise auf 340 bis 390°C, vorgeheizt war, über ihre Hohlwelle der gelbe Phosphor kontinuierlich in einer solchen Menge je Zeiteinheit eingetragen wird, dass die in der Kugelmühle herrschende Temperatur ohne weitere äussere Wärmezufuhr aufrechterhalten wird, wobei die je Zeiteinheit eingetragene Menge von gelbem Phosphor bei Temperaturanstieg in der Kugelmühle verringert und bei Temperaturabfall erhöht wird; dass der Eintrag von gelbem Phosphor in die Kugelmühle bei maximal 50% ihres Füllvolumens beendet wird; dass der in der Kugelmühle befindliche Phosphor nach Beendigung des Eintrages von gelbem Phosphor bis zu 15 Stunden, vorzugsweise bis zu 3 Stunden, bei 200 bis 590°C bei drehender Kugelmühle getempert wird; dass der rote Phosphor bei drehender Kugelmühle auf Raumtemperatur abgekühlt wird; dass die Kugelmühle geöffnet und mit bis zu mindestens 75% ihres Volumens mit Wasser gefüllt wird; dass der rote Phosphor in der drehenden Kugelmühle einer Nassmahlung unterworfen wird; und dass aus der Kugelmühle eine wässrige Suspension von rotem Phosphor entnommen wird.

Das Verfahren gemäss der Erfindung kann wahlweise auch noch dadurch gekennzeichnet sein, dass

a) die Kugelmühle vor dem Eintrag des gelben Phosphors evakuiert ist;

b) die Kugelmühle vor dem Eintrag des gelben Phosphors mit Inertgas, vorzugsweise Stickstoff, gefüllt ist;

c) die Kugelmühle mit Eisenkugeln mit Durchmessern von 2 bis 50 cm gefüllt ist;

d) der Phosphordampf-Druck in der Kugelmühle in Abhängigkeit von der Temperatur 1 bis 45 bar beträgt.

Eine Vorrichtung zur Durchführung des erfindungsgemässen Verfahrens besteht aus einer mit Kugeln gefüllten und mit drehbar gelagerten Wellen versehenen Trommel, wobei mindestens eine Welle eine Hohlwelle ist und ist durch eine an der Hohlwelle angeordnete Dosiereinrichtung für gelben Phosphor gekennzeichnet.

Diese Vorrichtung kann wahlweise auch noch dadurch ausgestaltet sein, dass

e) die Dosiereinrichtung aus einem gewinkelten Zuführungsrohr für gelben Phosphor besteht, in dessen einem Schenkel eine Dosierstange angeordnet ist, welche mit Hilfe eines Kolbens betätigbar ist und dass das Zuführungsrohr von einem ersten Mantel und einem zweiten Mantel konzentrisch umgeben ist, wobei die Ringräume zwischen dem Zuführungsrohr und den Mänteln über Eintrittsstutzen und Austrittsstutzen mit Warmwasser beaufschlagbar sind;

f) der Eintrittsstutzen und der Austrittsstutzen in je einem feststehenden Ring eingesetzt sind, wobei die Ringe den Warmwasserkreislauf mit Hilfe von elastischen Dichtungen abdichten;

g) das Zuführungsrohr und der Mantel durch in sie konzentrisch zur Dosierstange eingesetzte Faltenbälge in Achsrichtung flexibel sind;

h) am Deckel ein kreisförmiger Schild mit Hilfe einer Strebe befestigt ist, wobei der Schild senkrecht zur Achse der Trommel angeordnet ist und der Mittelpunkt des Schildes etwa mit der Trommelachse zusammenfällt.

Beim Verfahren gemäss der Erfindung befindet sich stets nur eine sehr kleine Menge von gelbem Phosphor in der Reaktionszone, so dass die exotherme Umwandlung in roten Phosphor nicht ausser Kontrolle geraten kann. Durch die Temperung des in der Kugelmühle befindlichen Phosphors nach Beendigung des Eintrages von gelbem Phosphor wird eine Verbesserung der Produktqualität erreicht. Füllt man die Kugelmühle mit Kugeln verschiedenen Durchmessers, so wird nach der Nassmahlung eine wässrige Suspension von feinkörnigem rotem Phosphor erhalten.

Die Kapazität einer Kugelmühle zur Herstellung von rotem Phosphor nach dem Stand der Technik lässt sich durch Umrüstung in eine Vorrichtung zur Durchführung des erfindungsgemässen Verfahrens mehr als verdoppeln, was in erster Linie auf das Entfallen des langwierigen und gefährlichen Hochheizens der mit gelbem Phosphor gefüllten Kugelmühle zurückzuführen ist.

Durch die Anordnung des kreisförmigen Schildes in der Vorrichtung zur Durchführung des erfindungsgemässen Verfahrens wird verhindert, dass der eingespritzte gelbe Phosphor auf die gegenüberliegende Stirnseite der Trommel auftrifft und dort nach der Umwandlung als roter Phosphor haften bleibt. Ein in dieser Weise anhaftender roter Phosphor kann durch die rotierende Kugelfüllung nur sehr schwierig abgetragen werden.

In der beigefügten Zeichnung ist eine Vorrichtung zur Durchführung des erfindungsgemässen Verfahrens schematisch und teilweise im Schnitt dargestellt. Dabei zeigen:

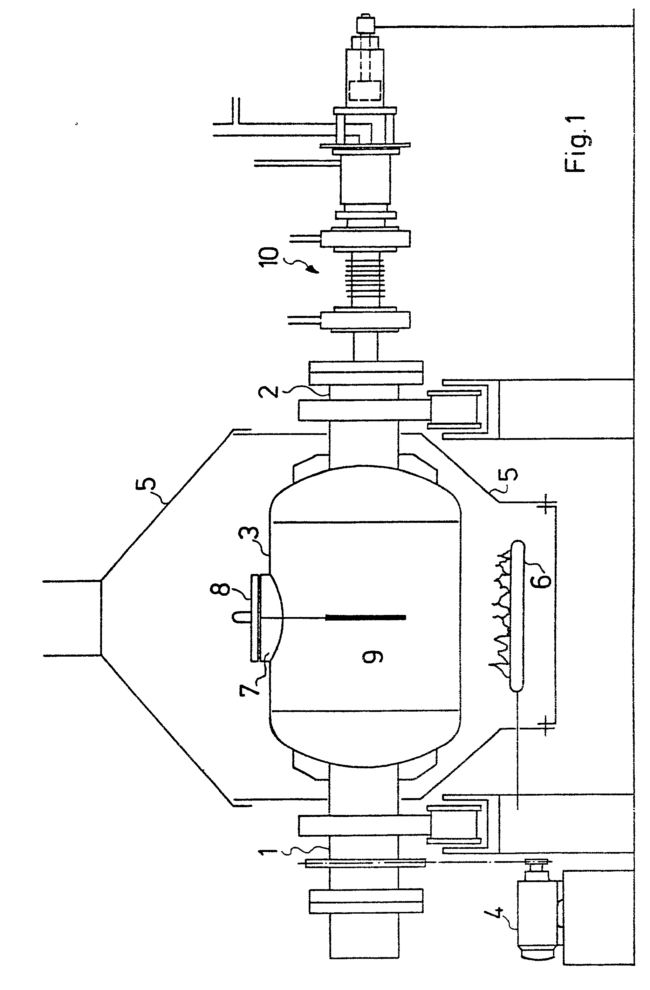

Figur 1 eine Seitenansicht auf eine Kugelmühle mit Dosiereinrichtung für gelben Phosphor

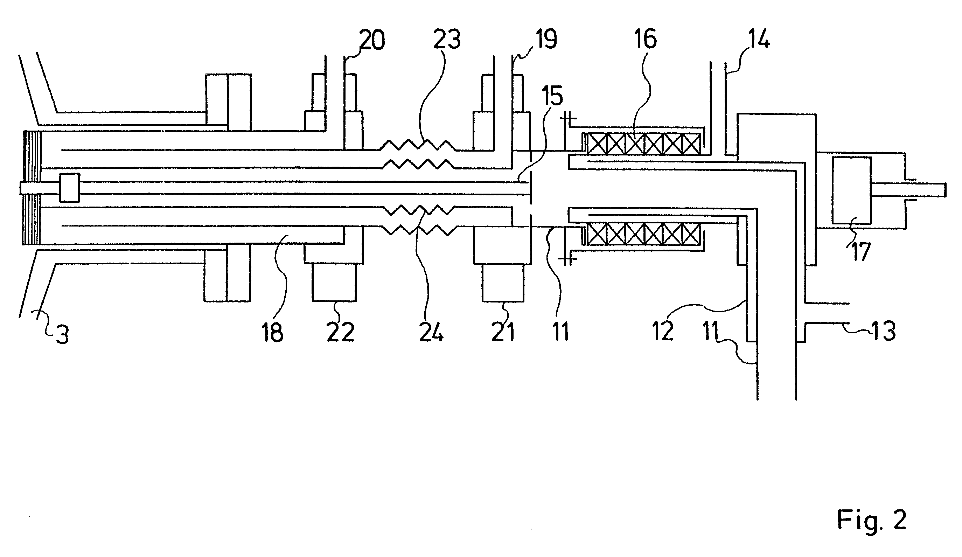

Figur 2 eine vergrösserte Darstellung der Dosiereinrichtung.

Eine mit drehbar gelagerten Hohlwellen (1, 2) versehene und mit Kugeln gefüllte Trommel 3 ist durch einen Motor 4 antreibbar. Die in einem Isoliergehäuse 5 angeordnete Trommel 3 ist mit einer Heizeinrichtung 6, beispielsweise einem Gasbrenner, beheizbar. Die Trommel 3 weist in ihrem zylindrischen Teil eine Öffnung 7 auf, welche mit einem Deckel 8 verschliessbar ist. Am Deckel 8 ist mit Hilfe einer Strebe ein kreisförmiger Schild 9 befestigt, welcher senkrecht zur Trommelachse angeordnet ist und dessen Mittelpunkt etwa mit der Trommelachse zusammenfällt.

Während die eine Hohlwelle 1 der Trommel 3 verschlossen ist, ist an der anderen Hohlwelle 2 die Dosiereinrichtung 10 für gelben Phosphor angeordnet. Die Dosiereinrichtung 10 besteht aus einem Zuführungsrohr 11, um welches ein von Warmwasser (60°C) durchflossener erster Mantel 12 mit Eintrittsstutzen 13 und Austrittsstutzen 14 angeordnet ist. Durch das Zuführungsrohr 11 tritt bei geöffneter Stellung einer Dosierstange 15 gelber Phosphor nach Passieren einer Stopfbüchse 16 in die Trommel 3 ein. Die Betätigung der Dosierstange 15 erfolgt mit Hilfe eines pneumatisch oder hydraulisch betätigbaren Kolbens 17, wobei die Hübe der Dosierstange 15 durch zwei Faltenbälge (23, 24) kompensiert werden. Um den der Trommel 3 zugewandten Bereich des Rohres 11 ist ein zweiter, von Warmwasser durchflossener Mantel 18 angeordnet, dessen Eintrittsstutzen 19 und Austrittsstutzen 20 in je einen feststehenden Messingring (21, 22) eingesetzt sind, wobei die Messingringe (21, 22) den Warmwasserkreislauf mit Hilfe von O-Ringen abdichten.

Beispiel 1

Eine mit Dosiereinrichtung versehene Kugelmühle mit einem Volumen von 140 l, welche mit 65 Eisenkugeln mit Durchmessern von 5 bis 10 cm gefüllt ist, wird nach Füllung mit Stickstoff verschlossen und auf 360°C aufgeheizt. Im laufe von 70 Minuten werden 50 kg geschmolzener gelber Phosphor in die Kugelmühle eindosiert, wobei der Druck in ihr von 1,5 bar auf 6,5 bar ansteigt. Nach Beendigung der Eindosierung wird bei drehender Kugelmühle noch 30 Minuten bei 360°C getempert. Anschliessend wird die Kugelmühle drehend in 9 Stunden auf Raumtemperatur abgekühlt. Nach dem Öffnen wird die Kugelmühle vollständig mit Wasser gefüllt. Nach erneutem Verschliessen der Kugelmühle erfolgt eine zweistündige Nassmahlung. Der Feststoff der anschliessend aus der Kugelmühle ausgetragenen Suspension besteht zu 99,5% aus rotem Phosphor.

Beispiel 2

Eine mit Dosiereinrichtung versehene Kugelmühle mit einem Volumen von 5 m³, welche mit 3700 kg Eisenkugeln mit Durchmessern von 2 bis 20 cm gefüllt ist, wird mit Stickstoff gespült und verschlossen. Nach Aufheizen auf 350°C werden in die Kugelmühle im Laufe von 3 Stunden 2000 kg geschmolzener gelber Phosphor eindosiert, wobei der gelbe Phosphor je Zeiteinheit so dosiert wird, dass eine Temperatur von etwa 350°C in der Kugelmühle aufrechterhalten wird. Während der Eindosierung des gelben Phosphors steigt der Druck in der Kugelmühle von 1,5 auf 7,0 bar an. Nach Beendigung der Eindosierung wird bei drehender Kugelmühle noch 2 Stunden bei 350°C getempert. Anschliessend wird die Kugelmühle drehend in 10 Stunden auf Raumtemperatur abgekühlt. Nach dem Öffnen wird die Kugelmühle zu 75% mit Wasser gefüllt und nach erneutem Verschliessen erfolgt eine zweistündige Nassmahlung. Der Feststoff der anschliessend aus der Kugelmühle ausgetragenen Suspension besteht zu 99,8% aus rotem Phosphor.

**Patentansprüche**

1. Verfahren zur Herstellung von rotem Phosphor durch thermische Umwandlung von geschmolzenem gelbem Phosphor in einer geschlossenen Reaktionszone, wobei die Temperatur in der Reaktionszone über die Dosierung des in sie eingebrachten gelben Phosphors geregelt wird, dadurch gekennzeichnet, dass in eine mit Eisenkugeln bis zu 20% ihres Volumens gefüllte Kugelmühle, welche auf eine Temperatur von 280 bis 590°C, vorzugsweise auf 340 bis 390°C, vorgeheizt war, über ihre Hohlwelle der gelbe Phosphor kontinuierlich in einer solchen Menge je Zeiteinheit eingetragen wird, dass die in der Kugelmühle herrschende Temperatur ohne weitere äussere Wärmezufuhr aufrechterhalten wird, wobei die je Zeiteinheit eingetragene Menge von gelbem Phosphor bei Temperaturanstieg in der Kugelmühle verringert und bei Temperaturabfall erhöht wird; dass der Eintrag von gelbem Phosphor in die Kugelmühle bei maximal 50% ihres Füllvolumens beendet wird; dass der in der Kugelmühle befindliche Phosphor nach Beendigung des Eintrages von gelbem Phosphor bis zu 15 Stunden, vorzugsweise bis zu 3 Stunden, bei 200 bis 590°C bei drehender Kugelmühle getempert wird; dass der rote Phosphor bei drehender Kugelmühle auf Raumtemperatur abgekühlt wird; dass die Kugelmühle geöffnet und mit bis zu mindestens 75% ihres Volumens mit Wasser gefüllt wird; dass der rote Phosphor in der drehenden Kugelmühle einer Nassmahlung unterworfen wird; und dass aus der Kugelmühle eine wässrige Suspension von rotem Phosphor entnommen wird.

2. Verfahren nach Anspruch 1, dadurch gekennzeichnet, dass die Kugelmühle vor dem Eintrag des gelben Phosphors evakuiert ist.

3. Verfahren nach Anspruch 1, dadurch gekennzeichnet, dass die Kugelmühle vor dem Eintrag des gelben Phosphors mit Inertgas, vorzugsweise Stickstoff, gefüllt ist.

4. Verfahren nach einem der Ansprüche 1 bis 3, dadurch gekennzeichnet, dass die Kugelmühle mit Eisenkugeln mit Durchmessern von 2 bis 50 cm gefüllt ist.

5. Verfahren nach einem der Ansprüche 1 bis 4, dadurch gekennzeichnet, dass der Phosphordampf-Druck in der Kugelmühle in Abhängigkeit von der Temperatur 1 bis 45 bar beträgt.

6. Vorrichtung zur Durchführung des Verfahrens nach den Ansprüchen 1 bis 5, bestehend aus einer mit Kugeln gefüllten und mit drehbar gelagerten Wellen (1, 2) versehenen Trommel (3), wobei mindestens eine Welle eine Hohlwelle ist, und wobei die Trommel (3) in einem Isoliergehäuse (5) angeordnet sowie in ihrem zylindrischen Teil mit einer mit einem Deckel (8) verschliessbaren Öffnung (7) versehen ist, und wobei unterhalb der Trommel (3) innerhalb des Isoliergehäuses (5) eine Heizeinrichtung (6) angeordnet ist, gekennzeichnet durch eine an der Hohlwelle (2) angeordnete Dosiereinrichtung (10) für gelben Phosphor.

7. Vorrichtung nach Anspruch 6, dadurch gekennzeichnet, dass die Dosiereinrichtung (10) aus einem gewinkelten Zuführungsrohr (11) für gelben Phosphor besteht, in dessen einem Schenkel eine Dosierstange (15) angeordnet ist, welche mit Hilfe eines Kolbens (17) betätigbar ist und dass das Zuführungsrohr (11) von einem ersten Mantel (12) und einem zweiten Mantel (18) konzentrisch umgeben ist, wobei die Ringräume zwischen dem Zuführungsrohr (11) und den Mänteln (12, 18) über Eintrittsstutzen (13, 19) und Austrittsstutzen (14, 20) mit Warmwasser beaufschlagbar sind.

8. Vorrichtung nach Anspruch 7, dadurch gekennzeichnet, dass der Eintrittsstutzen (19) und der Austrittsstutzen (20) in je einem feststehenden Ring (21, 22) eingesetzt sind, wobei die Ringe (21, 22) den Warmwasserkreislauf mit Hilfe von elastischen Dichtungen abdichten.

9. Vorrichtung nach Anspruch 6 oder 7, dadurch gekennzeichnet, dass das Zuführungsrohr (11) und der Mantel (18) durch in sie konzentrisch zur Dosierstange (15) eingesetzte Faltenbälge (23, 24) in Achsrichtung flexibel sind.

10. Vorrichtung nach einem der Ansprüche 6 bis 9, dadurch gekennzeichnet, dass am Deckel (8) ein kreisförmiger Schild (9) mit Hilfe einer Strebe befestigt ist, wobei der Schild (9) senkrecht zur Achse der Trommel (3) angeordnet ist und der Mittelpunkt des Schildes (9) etwa mit der Trommelachse zusammenfällt.

## Claims

1. Process for making red phosphorus by subjecting molten yellow phosphorus to thermal conversion in a closed reaction zone, the temperature prevailing therein being regulated by the supply of metered quantities of yellow phosphorus, characterized in that yellow phosphorus is continuously introduced into a ball mill filled up to 20% its volume with iron balls and preheated to a temperature of 280 to 590°C, preferably 340 to 390°C, the phosphorus being introduced into the mill through its hollow shaft in quantities per unit time permitting the temperature prevailing therein to be maintained without supply of heat from the outside, decreasing quantities of yellow phosphorus per unit time, being introduced at increasing temperature and increasing quantities of yellow phosphorus per unit time, being introduced at decreasing temperature, inside the ball mill; in that the introduction of yellow phosphorus into the ball mill is stopped once the mill is filled therewith to an extent of at most 50% its volume; in that, after complete introduction of yellow phosphorus, the phosphorus present in the ball mill is calcined over a period of up to 15 hours, preferably 3 hours, at 200 to 590°C with the ball mill rotating; in that the red phosphorus is cooled down to room temperature with the ball mill rotating; in that the ball mill is opened and filled with water to an extent of at least 75% its volume; in that the red phosphorus is subjected to a wet·grinding operation with the ball mill rotating; and in that an aqueous suspension of red phosphorus is taken from the ball mill.

2. Process as claimed in claim 1, wherein the ball mill is evacuated prior to introducing yellow phosphorus thereinto.

3. Process as claimed in claim 1, wherein the ball mill is filled with an inert gas, preferably nitrogen, prior to introducing yellow phosphorus thereinto.

4. Process as claimed in any of claims 1 to 3, wherein the ball mill is filled with iron balls with a diameter within the range 2 to 50 cm.

5. Process as claimed in any of claims 1 to 4, wherein the phosphorus vapor pressure inside the ball mill is maintained within the range 1 to 45 bars, depending on the temperature prevailing.

6. Apparatus for carrying out the process as claimed in any of claims 1 to 5, comprised of a drum (3) filled with balls and provided with at least two rotatably mounted shafts (1, 2) of which at least one is a hollow shaft, the drum (3) being placed in an insulating housing (5) and the cylindrical portion of the drum being formed with an opening (7) closable by means of a cover (8); and a heating source (6) being disposed inside the insulating housing (5) below the drum (3); and characterized in that a yellow phosphorus dosing feeder (10) is connected to one of the hollow shafts (2).

7. Apparatus as claimed in claim 6, characterized in that the dosing feeder (10) is an angled yellow-phosphorus feed pipe (11) having a dosing rod (15) actuated by means of a piston (17), disposed in one of its two arms, the feed pipe (11) being concentrically surrounded by a first jacket (12), and a second jacket (18), the annular gaps formed between the feed pipe (11) and jackets (12, 18) being provided with inlets (13, 19) and outlets (14, 20) permitting water to be passed therethrough.

8. Apparatus as claimed in claim 7, characterized in that the inlet (19) and outlet (20), respectively, is mounted in a stationary collar (21, 22) provided with elastic packing means sealing warm water circulation.

9. Apparatus as claimed in claim 6 or 7, wherein the feed pipe (11) and a jacket (18) are made flexible in axial direction by means of bellows (23, 24) arranged concentrically therein, with respect to the dosing rod (15).

10. Apparatus as claimed in any of claims 6 to 9, characterized in that the cover (8) has a circular shield (9) fixed thereto by means of a stay, the shield (9) being arranged transversaly with respect to the axis of the drum (3), and the center of the shield (9) being approximately in coincidence with the axis of the drum.

## Revendications

1. Procédé de préparation de phosphore rouge par conversion thermique de phosphore blanc fondu dans une zone de réaction fermée, la température régnant à l'intérieur de cette dernière étant réglée par l'amenée de quantités dosées de phosphore blanc, caractérisé en ce que, dans un broyeur à billes rempli jusqu'à 20% de son volume de billes en fer et préchauffé à 280–590°C, de préférence 340–390°C, on introduit en continu par son arbre creux du phosphore blanc en quantité par unité de temps permettant de maintenir la température régnant à l'intérieur du broyeur sans apport de chaleur de l'extérieur, la quantité de phosphore blanc introduite par unité de temps étant diminuée pour une montée de température et augmentée pour une chute de température à l'intérieur du broyeur à billes; en ce que l'on arrête l'introduction du phosphore blanc dans le boyeur dès remplissage de ce dernier à 50% de son volume au maximum; en ce qu'après la fin de l'introduction du phosphore blanc l'on recuit le phosphore présent dans le broyeur pendant une période allant jusqu'à 15 heures, de préférence jusqu'à 3 heures, à 200–590°C avec le broyeur en rotation; en ce que l'on laisse le phosphore rouge refroidir à la température ambiante avec le broyeur en rotation; en ce que l'on ouvre le broyeur à billes et on le remplit d'eau jusqu'à 75% de son volume au minimum; et en ce que l'on soumet le phosphore rouge au broyage humide avec le broyeur en marche et en ce que l'on évacue du broyeur une suspension aqueuse de phosphore rouge.

2. Procédé selon la revendication 1, caractérisé en ce qu'avant l'introduction du phosphore blanc, on évacue le broyeur à billes.

3. Procédé selon la revendication 1, caractérisé en ce qu'avant l'introduction du phosphore blanc, on remplit le broyeur à billes d'un gaz inerte, de préférence d'azote.

4. Procédé selon l'une des revendications 1 à 3, caractérisé en ce que l'on remplit le broyeur à billes de billes en fer de diamètre 2 à 50 cm.

5. Procédé selon l'une des revendications 1 à 4, caractérisé en ce que, dans le broyeur à billes, on maintient une pression de vapeur de phosphore de 1 à 45 bars, selon la température.

6. Appareillage pour la mise en œuvre du procédé selon l'une des revendications 1 à 5, constitué par un tambour (3) rempli de billes et muni d'arbres rotatifs (1, 2), dont l'un au minimum est un arbre creux, le tambour (3) étant agencé dans un boîtier isolant (5) et étant pourvu, dans sa partie cylindrique, d'une ouverture (7) obturable par un couvercle (8), et un dispositif chauffant (6) étant disposé au-dessous du tambour (3) à l'intérieur du boîtier isolant (5), caractérisé en ce qu'il comporte un dispositif (10) de dosage de phosphore blanc monté sur l'arbre creux (2).

7. Appareillage selon la revendication 6, caractérisé en ce que le dispositif de dosage (10) comprend un tube coudé (11) d'amenée de phosphore blanc ayant une bielle de dosage (15) agencée dans l'une de ses deux branches, la bielle (15) pouvant être actionnée à l'aide d'un piston (17), le tube d'amenée (11) étant concentriquement entouré par une première enveloppe (12) et une deuxième enveloppe (18), les espaces annulaires entre le tube d'amenée (11) et les enveloppes (12, 18) étant munis de tubulures d'entrée (14) et de sortie (20), respectivement, permettant de faire passer de l'eau chaude dans ces espaces.

8. Appareillage selon la revendication 7, caractérisé en ce que chacune des tubulures d'entrée (19) et de sortie (20) est agencée dans un logement annulaire stationnaire (21) et (22), respectivement, les éléments (21) et (22) étant munis de garnitures élastiques étanchéifiant le circuit d'eau chaude.

9. Appareillage selon la revendication 6 ou 7, caractérisé en ce que le tube d'amenée (11) et l'enveloppe (18) sont flexibles en direction axiale par l'intermédiaire de soufflets élastiques (23, 24) installés concentriquement par rapport à la bielle de dosage (15).

10. Appareillage selon l'une des revendications 6 à 9, caractérisé en ce qu'un bouclier circulaire (9) est monté sur le couvercle (8) à l'aide d'une jambe de force, le bouclier (9) étant disposé perpendiculairement à l'axe du tambour (3) et le centre du bouclier (9) coïncidant à peu près avec l'axe du tambour.

Fig. 1

Fig. 2